(19) Europäisches Patentamt
European Patent Office
Office européen des brevets

(11) EP 0 541 530 B1

(12) EUROPEAN PATENT SPECIFICATION

(45) Date of publication and mention of the grant of the patent:
**07.01.1998 Bulletin 1998/02**

(21) Application number: **90910148.7**

(22) Date of filing: **09.07.1990**

(51) Int Cl.6: **C09K 3/10**, H01B 7/28

(86) International application number:
**PCT/GB90/01055**

(87) International publication number:
**WO 91/00896 (24.01.1991 Gazette 1991/03)**

# (54) ENVIRONMENTAL PROTECTION AND SEALING

Umweltschutz und Abdichtung

PROTECTION ET ETANCHEMENT

(84) Designated Contracting States:
**AT BE CH DE DK ES FR GB IT LI NL SE**

(30) Priority: **07.07.1989 GB 8915614**

(43) Date of publication of application:
**19.05.1993 Bulletin 1993/20**

(73) Proprietor: **RAYCHEM LIMITED**
**London NW1 4HL (GB)**

(72) Inventors:
- **PEACOCK, Don**
  **Gloucestershire GL7 4EU (GB)**
- **OVERBERGH, Noel**
  **B-3110 Rotselaar (BE)**
- **PARK, Barry**
  **Swindon Wiltshire SN5 9BP (GB)**

(74) Representative: **Benson, John Everett et al**
**Raychem Limited**
**Intellectual Property Law Department**
**Faraday Road**
**Dorcan**
**Swindon, Wiltshire SN3 5HH (GB)**

(56) References cited:

| | |
|---|---|
| **EP-A- 0 010 576** | **FR-A- 2 307 347** |
| **GB-A- 1 426 763** | **GB-A- 2 135 139** |

- **Chemical Abstracts, volume 105. no. 16. 20 October 1986. (Columbus, Ohio, US), see page 96, abstract 135690g, & JP, A, 6166779 (One component elastic sealants) 5 April 1986**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 541 530 B1

## Description

The present invention relates to sealing for example to environmental protection especially of cables and particularly by bonding, isolating or blocking.

Whilst the invention is applicable to sealing in general, it will be described principally in connection with cable accessories for protection of telecommunications cables, where particularly severe problems are met.

If a cable is to function properly over its desired life-time, which may be twenty years or more, environmental contaminants, particularly water, must be kept at bay. Many techniques are available to prevent or to mitigate the effects of contaminants entering a cable, one of which particularly applicable to buried or underground cable is internal pressurization: dry air is pumped into a cable jacket at one end of the cable and the effect is to prevent moisture entering or to flush out moisture that has entered the cable. Also, measurement of pressure at points along a cable run can provide a means of locating damage to a cable jacket since a sudden pressure drop will be noted immediately downstream from the damage. Pressurization is common over part of most telephone cable networks, the dry air being pumped in at the ends of the cables entering the telephone company's central office. Since it is neither practical nor desirable for the entire cable network to be pressurized (the small paircount cables and drop wires at the subscriber end may be grease filled, may be too small, or may be above ground) the cables must be blocked internally to isolate the pressurized part of the system.

Blocking may also be desirable to isolate parts of a non-pressurized cable system to stop contaminants that have entered a damaged part of a cable from spreading to other parts, and thus to avoid the need to replace more cable than is necessary.

A related form of environmental protection may be provided at cable splices, where two or more cables are joined together. Such splices require removal of cable jackets to expose the conductors so that they can be electrically (or, in the case of optical fibre cables, optically) connected. After the splice is made, the cable jackets must be made good across the splice. This is done by building a so-called "splice case" around the splice. Such splice cases may be filled with a sealing material to provide further protection around the connected conductors. Such filling may serve also to block the cables, but at least in theory it need not.

A cable block is typically made by removing a portion of cable jacket at the cable end or at a chosen position along the cable length, opening out the conductors which may otherwise, and generally will, be too tightly packed to allow sealing material to flow between them, driving the sealing material into the core of the cable, and surrounding the bared portion of the cable by some cover to make good the cable's mechanical strength. This technique is typically applied to telecommunications cables having from twenty or fifty or one hundred up to many thousands (for example 3600) of pairs of conductors. It may also be applied to high voltage cables, and to low voltage cable harnesses such as found on ships, automobiles and aeroplanes.

Whilst the basic idea of a cable block may be simply stated, it is far from simple to design a block that can be applied to a cable under typical ambient conditions without cable damage and that will function as desired. The problem arises because the temperature of the cable to be blocked may be low when the block is to be made, the block must function at much higher temperatures, the temperature that can be applied during installation of the block although yet higher is limited if cable damage in unskilled hands is to be avoided, and the material used for blocking must have a significant shelf-life before use.

During service the block of a blocked cable will experience a range of temperatures and pressures, and if a block is to have a sufficient life-time (comparable to that of the cable itself, eg twenty years or more) it must be able to pass certain functional tests designed to mirror long-term performance. These tests involve yet more severe temperature and pressure ranges. For example one test for telecommunications cables requires no leaks after 10 twelve hour cycles from -40°C to 70°C, or say -30°C to 60°C, at a pressure of 70KPa. A blocking material that readily flowed, ie had a low viscosity, at 60°C or 70°C would therefore be useless in that application.

If the material is to be substantially solid at say 60°C, it will presumably have to be heated far above that temperature if it is to be encouraged to flow into the centre of the core of the cable, through tiny interstices between the conductors of the cables which act as a heatsink. A low viscosity is required at installation.

The cable to be blocked may be quite cold, for example if it is out of doors (as will generally be the case of a telecommunications cable) particularly in winter where in many countries cool or cold temperatures may be expected. An electrical cable is an efficient heat-sink, having a large mass and therefore heat capacity, and being almost totally, by weight, copper which is highly heat-conductive. If a temperature of far above 60°C is to be achieved by the sealing material at the centre of a cable whose diameter may be as large as 5 cms or more, a temperature yet far higher must be provided at the outside of the cable.

Unfortunately many cables have jackets and conductor coatings of a low grade polyethylene or other material that is readily damaged at the higher temperatures required.

This problem has been solved in the prior art by the use of curing liquids which on initial mixing have very low viscosity and which will therefore flow into the centre of the cable. If all goes well the mixed liquids will reach the centre

of the cable and then cure without too much liquid being wasted by flowing longitudinally along the interstices between the conductors. After curing, the resulting cable block will not flow at the higher temperatures expected in service or required for testing.

A brief review of prior art disclosing such curing systems will now be made.

EP0115220 (3M) discloses a process for producing a block at a termination of a pressurized communications cable employing a curable sealing composition in a flexible heat-shrinkable sheath which is heat-sealed on the cable jacket at an end of the cable. The sealing composition used is arranged to be cured at a higher rate by applying heat and the sheath is made of heat-shrinkable material. Preferred sealing compositions are polyurethane-based compositions sold by 3M under the trademark "Polyurethane Resin 9403".

US 4500747 (Dubreuil et al.) discloses a cable plug and method in which hardened plugging compound surrounds individually-insulated conductors and a radially-resilient spring is placed around the compound which holds the spring in a resiliently-expanded condition to compress the compound onto the individual insulations of the conductors. A sleeve may surround the compound. The plug material may be a polyethylene polyol compound known by the trademark "Y Plug Compound", manufactured by Chemque Canada Ltd, a 3M plugging compound known by the trade mark 4407-Al, or a polyurethane plugging compound sold by Biwax Corporation under the trade mark 82.526.

US 4102716 (Groves et al) discloses a two-part pourable composition capable of forming a dielectric thermally stable, hydrolytically stable, moisture sensitive polyurethane gel comprising in the first part an aliphatic or cycloaliphatic isocyanate and an aliphatic/naphthenic hydrocarbon oil, and in a second part a polyalkadiene polyol, a dialkyl organotin catalyst and the aliphatic/naphthenic oil. The gel is said to be suitable as a filler for communications cable splices since it is substantially inert towards certain connectors used in such splices. As prior art a hot-pour process is also described employing an amorphous or semi-crystalline polyolefin bitumen or paraffinic wax.

An article in "Wire and Wire Products" May 1970 page 61 entitled "Pressure Dams in Communication Cables" by J.B. Masterton discusses the use of polyurethane elastomers as damming materials. Various unspecified polyurethanes were tested and gel times and viscosities versus temperature were plotted to compare the temperatures at which effective dams could be made. Ideally, a compound should have a low viscosity until a predetermined time at which point the viscosity would increase sharply. That would allow for complete flow into the cable within a predetermined time period, then a quick change in state from liquid to gel at which time no further flow occurs.

U.S. 4329442 (Pokorny) discloses a polyurethane resin prepared from aliphatic or cycloaliphatic isocyanate, a polydiol, a tri- or tetra-functional aliphatic polyol, and a mono-functional aliphatic alcohol, in the presence of a suitable catalyst. The resin exhibits suitable adhesion to greasy wires in communications and other electrical cables. Reference is also made to a tacky, elastic polyurethane-based filler that has major polyester-polyether-polyol or polyester-polyol component, the di-isocyanate component being aryl, alkyl or (ar)alkyl di-isocyanate (see DE 2847387).

U.S. 4314092 (Fleming et al) discloses rehabilitation of telephone cables by installing a tube over a butt splice and filling it with a waterproofing material comprising a room-temperature curing, re-enterable, oil-extended polyurethane made from two parts that are mixed to form a pliable solid. In a prefered embodiment, the urethane is based on a polybutadiene glycol.

U.S. 4461736 (Takagi) discloses a method of producing a dam in a cable by removing a portion of jacket, surrounding the exposed conductors with a mould and injecting a self-curing resin that foams on curing within the mould. The rate at which the resin is foamed and cured is so determined that foaming and curing progresses as the resin permeates interstices between the conductors of the cable. A consideration is made of "cream time", namely the period after two components of the resin are mixed until the resin exhibits a creamy state due to the heat of reaction.

U.S. 3944183 (Miller) discloses the use of channeling wedges for separating conductors in a cable bundle and for separating a cable shield from the jacket to form passages allowing a curing resin or compound to flow more freely when forming a cable block.

WO 86/001666 (ATT) discloses a polyurethane-based cable splice encapsulant that includes an ester plasticizer and, optionally, a diluent, and has a cure time of at least 50 minutes at 25°C and a viscosity between 0.15 and 1.5 PaS. The encapsulant is preferably used in a forced encapsulation system. The encapsulant comprises at least one isocyanate, at least one polyol, at least one ester plasticizer and the diluent. It is advantageously used by mixing at the splice site and pouring into a splice enclosure where it cures in situ. Reference may also be made to WO 85/00879 (ATT) which discloses an encapsulation system for communications cables in which a curing encapsulant is pumped into an elastomeric housing constructed around a cable.

DE 2539325 (Kabel Metal) discloses blocking of a communications cable by installing a heat-shrinkable sleeve around a cable portion bare of cable jacket, shrinking the ends of the sleeve to seal to the cable, introducing a liquid curing resin into the sleeve, blocking an aperture in the sleeve through which the resin was introduced, and then shrinking the remainder of the sleeve to drive the resin into the cable core.

Whilst these techniques may be satisfactory in some circumstances they are generally very difficult and messy to carry out. On-site mixing of unpleasant and sometimes toxic liquids is desirably avoided, since it is lengthy and spillage and contamination are difficult to avoid.

GB 2127736 (Northern Telecom) discloses a pump that can store and heat a hot-melt sealing material and pump it quickly into a cable core.

Curing liquids may also be avoided in the technique disclosed in UK Patent 2135139 (Raychem). There, an assembly is provided for applying heat-activatable adhesive to an elongate substrate, which comprises

a heat-recoverable driver sleeve;
a particulate heat-activatable adhesive; and
temporary restraining means, such as a mesh, for locating the adhesive adjacent an inner surface of the sleeve until heat-recovery of the sleeve.

A preferred heat-activatable adhesive for that assembly is a hot-melt adhesive, particularly a polyamide, having an activation temperature of 65-80°C and an average particle diameter of 1-3mm.

Excellent results are obtaining with sucn an assembly, known by the Raychem Trade Mark "DWBS", particularly for diameters ranging from 18-30mm. Under unfavourable conditions, however, some difficulties may be experienced when blocking larger cables particularly at low temperatures since it may be difficult to get the preferred polyamide adhesives to flow as desired into the cable core.

We have now devised a method and products for blocking up to diameters of 40 or 50 mm or more which generally correspond to about 1000 pairs of 0.5mm or more, and also at low temperatures, say as low as 0°C or -5°C, or lower in some instances. The method and products will also have uses for sealing, including blocking, isolating and bonding in other contexts, for example, pipes, harnesses, bell and spigot and other joints, electrical connectors bulkhead and other feedthroughs, terminal blocks and other plant particularly in the telecommunications industry.

We have considered the amount of heat that can be for example an open flame torch directed against a heat-shrinkable sleeve carrying the material), the rate at which heat will be lost to the cable by the material as it flows through interstices between the conductors, the effect of this loss of heat on the temperature of the material, the effect of temperature on viscosity, and the effect of viscosity on the ability of a heat-shrinkable sleeve (or whatever) to drive the adhesive to the centre of the cable core.

Three key temperatures may be noted: ambient tem-blocked) during installation of the block, (which may be as low as, say, -5°C); service temperature, which will be the maximum temperature the cable block experiences in use or during testing (say 60°C or 70°C), and installation temperature, which is the maximum temperature that can be seen during installation without damage to the cable etc. If the difficulties of an initially liquid sealing material are to be avoided, the sealing material will have $T_M$ greater than ambient temperature, but less than or equal to the installation temperature. After it has flowed to where it is needed, the sealing material will with time cool to ambient temperature and solidfy producing the desired block. We have further discovered that this can be achieved by selecting a material having a large difference between $T_M$ and its solidification temperature $T_S$, ie a large degree of supercooling, a phenomenon that is known per se. This analysis takes into account ambient and installation temperatures.

Thus, in a first aspect the invention provides a method of sealing a substrate (particularly one comprising a cable, especially to form a cable block) having an interstice (generally many interstices) therein, which comprises:

(1) providing a sealing material having $T_M$ - $T_S$ at least 15, preferably at least 20, more preferably at least 25, especially at least 30, more especially at least 35, centigrade degrees, and a dimensionally-recoverable article, the sealing material being provided as part of, or in conjunction with, the dimensionally-recoverable article;

(2) heating the material to a temperature of at least $T_M$;

(3) causing (preferably by driving by the dimensionally-recoverable article, especially a heat-shrinkable sleeve) the material to flow into the interstice; and

(4) solidifying the material, for example by cooling (which in this specification includes allowing to cool) and/or curing it to form the desired seal.

We have found that particular classes of polymers are of considerable benefit for sealing and although we do not wish to be bound by an theory we believe that for at least some members of these classes at least some of the benefit results from the above mentioned supercooling.

Thus, the invention also provides a method of sealing a substrate (particularly one comprising a cable, especially to form a cable block) having an interstice (generally many interstices) therein, which comprises:

(1) providing a sealing material comprising a solid polyester based polyurethane;

(2) heating the material to a temperature of at least $T_M$;

(3) causing (preferably by driving by a dimensionally-recoverable article, especially a heat-shrinkable sleeve) the material to flow into the interstice; and

(4) solidifying the material for example by cooling and/or curing the material to form the desired seal.

$T_M$ is measured by the well known technique of TMA (thermo-mechanical analysis), and using a Du Pont 942 Thermomechanical Analyser/Du Pont 190 Thermal Analyser at a heating rate of 10°C per minute and a load of 50g. A sample size of from 1-3mm should be used. A disc measuring 1-3mm in thickness is produced, preferably by cutting from a sample of the material concerned, and placed between two brass plates in the cage of the machine. The probe of the machine is allowed to rest on the top plate. The sample is surrounded by a furnace, and when the temperature reaches -30°C the 50g load is placed on the weight tray. The temperature is increased at a rate of 10°C per minute, and a graph of dimension change against temperature is plotted preferably showing at least T(0%), T(60%), T(90%) and T(100%). T(90%) is taken from the best line of the graph as $T_M$. That and the T(60%) value will also be noted for measurement of $T_S$ as described below.

Where the sample is very finely divided, for example in a fine powder, and the above mentioned disc cannot be produced (by melting and resolidifying for example) without changing the nature of the material, $T_M$ may be measured by Temperature Programmed Hot Stage Microscopy, as described in ASTM F766-82. This test may be calibrated for comparison with the above TMA test by performing both tests on a few control samples. Thus, a TMA value may be estimated for powders.

$T_S$ which may, but need not, be a crystallization temperature, is measured by the following method. Iso-thermal complex viscosity measurements are made from the melt, preferably using a Rheometrics melt rheometer, and in the parallel plate, oscillatory shear mode.

A sample of material in the form of a disc usually 2mm thick and 25mm diameter was placed between the parallel plates and heated to 30°C above T(90%) and allowed to equilibrate. The temperature was then reset to each of a series of temperatures T (for example 90, 80, 70, 60, 50, 40 and 30°C) in each of a series of experiments. Where the material under test undergoes some change (for example curing) a fresh sample will be required for each of these experiments. For each of these experiments, viscosity was measured as a function of time, as the sample cooled from T(90%) plus 30°C down to the relevant isothermal temperature T over a maximum period of 15 minutes and continued at T for a total of 45 minutes in the sample chamber.

Viscosity measurements were made at an oscillatory frequency of 1 Hz and 10% strain. The temperature $T_S$ was measured from the viscosity/time curve as that temperature at which the viscosity has increased by two decades (100 fold) over the equilibrium value at T(60%) plus 20°C in a period of 10 minutes.

For many uses a sealing material may be selected having the required $T_M$ - $T_S$ and also having $T_M$ greater than the service temperature. This need not however be the case since the material can be made to undergo a change that increases $T_M$ preferably after full penetration of the cable etc is achieved. This change may be brought about by curing. Thus, in a second aspect of the invention a curing sealing material having $T_M$ - $T_S$ at least 15 (etc.) centigrade degrees is used for blocking etc, thus allowing service temperatures to be achieved that are higher than $T_M$ of the uncured material.

The invention also provides an article which comprises:

(1) a dimensionally-recoverable (preferably heat-shrinkable) part; and

(2) a sealing material having $T_M$ - $T_S$ at least 15 (etc) centigrade degrees, preferably located at a surface of the part for example by bonding or mechanical fixing.

The recoverable part is preferably heat-recoverable (having a minimum recovery temperature TR) and has a recovery temperature of TM wherein $T_R$ and $T_M$ differ by less than 30, especially 20, centigrade degrees, and $T_R$ is preferably the larger. Recovery temperature is preferably 110-130°C, more preferably 120-125°C.

The invention further provides an article for environmental protection (for example blocking) of a substrate (for example a communications cable) which comprises:

(1) a sealing material having $T_M$ - $T_S$ at least 15 (etc) centigrade degrees;

(2) a container (for example a dimensionally-recoverable sleeve, optionally with a retaining means such as a mesh) containing the material; and

(3) means (such as the sleeve) for displacing the material into engagement (preferably by penetrating interstices thereof) with the substrate.

The invention still further provides a cable, particularly a telecommunications cable, especially of at least 50, more especially at least 100, particularly at least 200 pairs say up to 3600 pairs of conductors, having been blocked by a sealing material having $T_M$ - $T_S$ at least 15 (etc) centigrade degrees.

In general, we prefer that the sealing material is supplied at a temperature below $T_M$, is located adjacent the substrate at a temperature below $T_M$ and is then heated to a temperature above $T_M$.

The sealing material is preferably provided as part of or in conjunction with a hollow and/or dimensionally-recoverable article (preferably having $T_R$ greater than $T_M$), such as a sleeve for example a wrap-around sleeve (see GB 1155470) that can be positioned around at least part of the substrate to be protected. The sealing material may be provided at an internal surface of a sleeve and where, as is preferred, it is in particulate form, preferably substantially spherical to improve flow (particle size preferably maximum dimension from 0.5-5 mm especially 2-3 mm) it may be at least temporarily located at an internal surface of the sleeve, for example until recovery of the sleeve. Location may be by temporary retaining means such as a mesh (which includes knits, weaves, nets and other perforate structures) which may, but need not, melt or become displaced on heating. The mesh may remain during installation, the sealing material being displaced through its holes.

The sleeve may have end regions of smaller cross-section and an intermediate region of larger cross-section, the sealing material being located at said intermediate region such that an internal passage through the sleeve is substantially cylindrical.

In a preferred method, a cable block is formed by:

(1) removing a portion of cable jacket at an end or intermediate the ends of the cable;

(2) providing the sealing material at an inner surface of a heat-shrinkable sleeve;

(3) positioning the sleeve around the cable where the portion of jacket was removed;

(4) heating the sleeve (for example by a torch, by a hot-air gun or by self-contained electrical heating means forming part of or attached to the sleeve) to a temperature such that it shrinks and the material reaches $T_M$, shrinkage causing the material to flow between conductors of the cable; and

(5) cooling (which includes allowing to cool) and/or curing the sealing material to solidify it.

Step (2) is preferably carried out before step (3), but they may be simultaneous and in some circumstances step (3) may be carried out first. The sealing material may be first positioned around the cable (for example by providing it in one or more bags such as a segmented bag which is wrapped around the cable) and the sleeve positioned over it.

A second (and subsequent) heat-shrinkable or other sleeve or other device may be installed around the first-mentioned sleeve, for example to put further force on the internal sealing material, to provide strain relief or other mechanical or environmental protection.

The heat-shrinkable sleeve may comprise a monolithic extruded polymeric material such as one comprising polyethylene, and it may be cross-linked. A stronger sleeve may comprise a composite material, for example one comprising fibres and a matrix material. Preferably the fibres are shrinkable and preferably run circumferentially.
Glass or other strength fibres may run longitudinally. The fibres may comprise a fabric.

Some preferred physical properties of the sealing material will now be indicated.

$T_M$ is preferably from 40-110°C, particularly 45-85°C more preferably from 5°-75°C, and the sealing material preferably has a melt viscosity of from 10 to $10^4$ preferably from 50 to 5 x $10^3$ poise at 50°C (measured by the technique described above for $T_S$). If the melt viscosity is too low, the material may run too far axially along the cable without penetrating to the centre of the cable. We prefer that the viscosity does not increase greatly on cooling below the melting point into the super-cooled region until $T_S$ is reached.

As mentioned above, it may be desirable that the sealing material be curable since this will allow its use at a greater service temperature: after curing the material will be able to operate at a higher temperature without flowing, ie $T_M$ will have been increased. This feature need not, of course, detract from the usefulness of supercooling since that phenomenon has its primary use in enabling a block to be formed, ie of reconciling widely different installation and ambient temperatures. Also, we have noticed that at least some of the materials referred to herein have a rubbery nature after curing, which is useful in many sealing applications, for example for blocking encapsulation and for production of grommets.

Shelf-life must be considered, particularly in the case of a curing system, and this may introduce a further conflict

of temperatures. The material must be able to be stored at, say, 50°C for 1 year without reacting yet react sufficiently quickly at the installation temperature. Where the Arrhenius relationship makes that impossible for a single component system, the curing material can be supplied as first and second intermixed particulate materials which on heating to temperature $T_M$ melt and (a) form a composition which solidifies at temperature $T_S$ and (b) cure to form a cured composition which on heating after said solidification has a softening temperature greater than $T_M$. It may be noted that whilst $T_M$ on the initial heating generally relates to the unreacted materials, the value of $T_S$ on first cooling may relate to unreacted material, partially reacted material or wholly reacted material. We prefer that the rate of reaction is sufficiently slow that benefit of the lower solidification point of the unreacted material (than that of reacted material) is at least partially realized.

The chemical and polymeric nature of preferred sealing materials will now be discussed, although it should be understood that the invention is not limited to any specific chemistry. For example other materials may be used having any one or more of the physical or functional characteristics set out herein as desirable. The skilled reader will readily be able to choose analogues, as regards chemical functionality and/or polymeric structure, of the materials disclosed. Nonetheless, the following general points may be made.

It is preferred that the sealing material comprise one or more polymeric (including copolymeric) organic compounds, and if more than one compound is used they are preferably substantially compatible, by which we mean that no phase separation occurs between ambient and installation temperatures. We prefer that the material is moisture resistant and therefore that it is not soluble in water, that it is not brittle, that it is electrically insulating, that it has a low thermal coefficient of expansion or at least one that is similar to that of the substrate to be sealed, and for some uses (although not necessarily for blocking) that it forms a good bond with the substrate. Also we prefer that it is compatible with materials (such as petroleum jelly) used to fill cables, and does not form an oily interface therewith. Again, the skilled reader will be able to select polymers (including polymer blends) that have these properties.

The desirable rheological properties of the material, such as those mentioned above, will guide the reader in his selection of polymers. For example melt viscosity may suggest a certain molecular weight range, a lower molecular weight leading in general to a lower viscosity.

In order to achieve the desired degree of supercooling or length of time to solidification (whilst retaining a sufficiently low melt viscosity) or other property a polymer may be chosen that is crystalline or semi-crystalline after having been cooled below $T_S$, particularly where the crystallinity results from an interrupted structure along the polymer chain, for example by a regular block that forms crystalline domains separated by or capped by blocks that restrict formation of crystalline domains. As a result the polymer after having been cooled below $T_S$ may be quite highly crystalline, giving the cable block or whatever good stability at temperatures up to $T_M$ since much thermal energy is required to melt the crystalline domains; and at the same time a low $T_S$ or a long time to solidification may be achieved because the "interruptions" on the polymer chain reduce the number of ways, or degrees of freedom, in which crystalline domains may be formed. A contrast may be made with a semi-crystalline polymer such as polyethylene of regular, uniform, structure exhibiting ease of recrystallization since all parts of each molecule are similar. Expressed differently, what we prefer is a crystalline or semi-crystalline state that is thermodynamically stable, but whose formation is not kinetically favoured.

The interruption to crystallinity preferably results from one or more units along the polymer backbone that restricts the way in which other parts of the polymer can crystallize. As alternatives, the disrupting unit may be or be part of a side chain or may be a separate molecule.

The sealing material may comprise a blend of more than one polymeric material, or of one or more polymeric materials together with one or more oligomers and/or one or more monomers, or other chemical species. Such more complex materials may be desired where precise adjustment to viscosity, to supercooling or other physical or chemical property is desired. For example, a useful blend of polymer and oligomer or monomer may result from a copolymerization reaction if the relative quantities of the reactants are properly chosen. Other additives such as low molecular weight super cooling materials may be included.

A further consideration arises if the sealing material is to be curable. In general, this may be achieved in two ways. Firstly, the material having the desired supercooling (or other property) is blended with one or more additional materials, which other material cures to form a cross-linked structure. Secondly, the sealing material proper may be chosen, or modified, such that it itself cures. This is preferably achieved by providing certain end group functionality, such as acrylate or other ethylenic unsaturation, to the polymer. Where an oligomer and/or a monomer is also present (as a viscosity modifier for example) that too may have functionality (preferably the same) that allows the whole system to be cured.

A first class of polymers from which suitable materials may be selected has the general formula (i)

$$E\ [\ (P(A))_x\ (Q(B))_y R\ ]_n\ E \qquad (i)$$

wherein each of P, Q and R, which may be the same or different, comprises diisocyanates for example methylene diisocyanate, toluene diisocyanate and/or isophorone diisocyanate; and A comprises an aliphatic chain, a polyester, a polyether, polycarbonate and/or a polyamide (which may be hydroxy, carboxylic acid or amine terminated as appropriate); and B comprises a diol for example butanediol or hexanediol; and x and n each is an integer of one or more; and y is zero or an integer of one or more; and E where present is or is derived from a group having for example terminal hydrogen, hydroxyl, amine, carboxylic acid or acrylate for example hydroxyethylacrylate, hydroxyethylmethylacrylate, acrylic acid or methacrylic acid.

Preferred polymers within general formula (i) include acrylate or otherwise terminated thermoplastic polyurethanes, for example ones containing polyester, particularly polycaprolactone units. An example is a material (which comprises a polymeric blend) available from Baxenden Chemicals Ltd. of Lancashire England under the Trade Mark "Xenacryl", particularly Xenacryl 273.

A second class of polymers from which suitable materials may be selected has the general formula (ii)

$$E\ [(A)_a\ (B)_b\ (D)_d\ ]_n\ E \qquad \text{(ii)}$$

wherein each of A, B and D, which may be the same or different comprises an aliphatic chain, a polyester, a polyether and/or a polyamide (which may be hydroxy, carboxylic acid or amine terminated as appropriate); and a, b and d each is zero or an integer of one or more with the proviso that at least one of a, b and d is at least one; and E is as defined above.

Preferred polymer within general forumula (ii) include copolyesters or copolyamides such as those available from Dynamit Nobel under the Trade Mark "Dynapol" and from EMS under the Trade Mark "Griltex".

A third class of polymers from which suitable materials may be selected is poly alpha olefin homo- and co-polymers and polyethylene copolymers.

The material used in the invention may comprise a blend of any two or more of the materials mentioned herein, or a blend of one or more of them with one or more other materials. For example one or more reactive or non-reactive materials such as diluents, plasticizers, tacifiers, antioxidants etc may be included. The material referred to may be used in conjunction with one or more other materials, for example at different parts of a heat-shrinkable or other article.

In a particularly preferred embodiment of the first-mentioned class, the sealing material comprises:

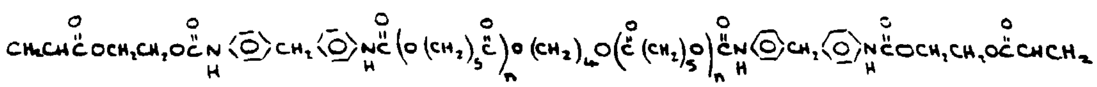

where n is such that the polyester block has a molecular weight from 2000 - 7000, preferably from 3000 - 5000, especially about 4000.

This polymer may be accompanied by say from 5 - 40% preferably 15 - 25% by weight based on the total of a lower molecular weight material such as

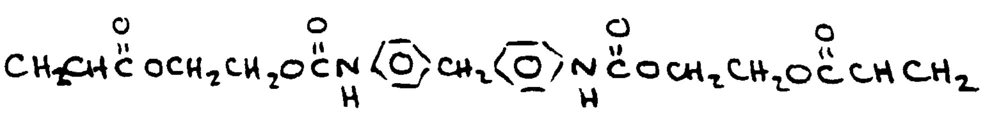

Such a material is known in itself and is available from Baxenden Chemicals Ltd of Lancashire England, under the Trade Mark "Xenacryl 273".

In general, therefore, preferred sealing materials comprise acrylate or otherwise terminated copolymers containing polyurethane and polycaprolactone units preferably with an acrylate or otherwise terminated urethane dimer, which copolymer and dimer preferably have the formulae given above.

Where a polyurethane based polymer is used, we prefer that it contains substantially no hard block since absence of such blocks reduces the melting point to a preferred value, and avoids high viscosity, which reduces flow. Suitable polyurethane units include methylene diisocyanate, toluene diisocyanate and/or isopherone diisocyanate and/or 2, 4, 4 - trimethylhexane diisocyanate.

The polyurethane also preferably contains polyester units such as polycaprolactone, polytetramethylene adipate and/or hexamethylene adipate units, and/or polyether units etc. as mentioned above since such materials have the

desirable crystallinity and desirable melting points.

For many preferred uses, the sealing material will be in particulate form (which term in general includes powders pellets and fibres etc.), preferably having a maximum dimension of particle size of 0.5 - 5 mm, especially from 2-3 mm. The particulate form can help displacement of the material (for example by shrinkage, of an overlying sleeve) and transfer of heat, which is particularly useful in the case of a cable block, and in the case of a curable sealing material allows good dispersion of one component within another (without reaction until melting).

It may be desirable that the sealing material be curable, for example to increase the temperature at which the sealed substrate may be used without melting, softening or degradation of the sealing material taking place. Also, or alternatively, curing may result in other changes in properties, for example the cured material may be more rubbery.

In a first curing embodiment the sealing material comprises a single component (which may comprise more than one molecular species) as supplied to the substrate. That component reacts with itself to cure for example when heat and/or when a catalyst is added to it for example by spraying or otherwise applying first to the substrate. The sealing material may have unsaturation, an example being where end groups E above comprise acrylate. The reaction may be a polymerization of a single species or a less specific cross-linking reaction.

In a second curing embodiment the sealing material is supplied as two (or more) sealing components which when brought into close contact, generally intimate contact caused by melting and subsequent flow, react together. Again, each component may comprise one or more molecular species, as above. The resulting curing reaction may be aided by heat and/or a catalyst. One or both of the sealing components may have any one or more of the various structures or properties referred to herein, for example a certain value of $T_M$ - $T_S$. Examples of chemical groups that may be possessed by the two components include: ethylenic unsaturation, epoxide, amine, hydroxyl, carboxylic acid and isocyanate. The skilled reader will be able to select reactive pairs of these groups for the two components.

In a third curing embodiment the sealing material is again supplied as two (or more) sealing components, but here a curing reaction takes place within one (or more) species of one (or of each separately) of the sealing components when the two components are brought into close contact. This is achieved by providing the reactive species in one of the components, and a curing agent, a catalyst and/or an initiator in the other so that the curing reaction does not start until the two components are brought together. (As mentioned above a curing reaction can take place in <u>each</u> of the components; but the two reactions will generally involve different chemistry otherwise each component will prematurely cure due to its containing a catalyst etc for the other component). This basic scheme may be varied slightly by having a curing agent (such as peroxide) in one of the sealing components and a catalyst (such as cobalt naphthenate) for the curing agent in the other sealing component. Now no reaction will take place until the two components are brought into close contact, but the same curing reaction may occur in the two sealing components. As above, one or both of the sealing components may have any one or more of the various structures or properties referred to herein.

A curable sealing material may include a thermally decomposable component (such as a blocked isocyanate) that within a certain temperature range will generate or release an active species to initiate or participate in cure.

Where we refer to $T_M$ in relation to the sealing material before installation we preferably refer to the highest $T_M$ if more than one component is provided, although for most purposes the $T_M$ of a resulting mixture may be considered. In calculating $T_S$, however, the $T_{90\%}$ will refer to that of the mixture of all of the relevant components.

Where the sealing material is curable we prefer that it comprises a mixture of

(i) in particulate form a blend of a curable polymer having $T_M$ - $T_S$ at least 15 (etc) centigrade degrees and a curing agent such as a peroxide;

(2) in particulate form a blend of a curable polymer having $T_M$ - $T_S$ at least 15 (etc) centigrade degrees and an initiator such as cobalt naphthenate.

The sealing material may also or alternatively comprise a mixture of

(1) in particulate form a blend of (a) a polymer having $T_M$ - $T_S$ at least 15 (etc) centigrade degrees and (b) a curable polyamide or a curable polyester; and

(2) in particulate form a blend of (a) a polymer having $T_M$ - $T_S$ at least 15 (etc) centigrade degrees and (b) an epoxide.

The invention is further illustrated by the following drawings in which

Figures 1 and 2 show a sleeve forming a cable block around a telecommunications cable;

Figures 3 and 4 show a high voltage cable splice being blocked using the invention

Figure 5 shows protection of a low pair-count cable;

Figure 6 shows sealing of wires; and

Figure 7 shows a variation on figures 1 and 2.

Figure 1 shows a heat-shrinkable sleeve of the type disclosed in GB 2135139 (Raychem) but containing a particulate sealing material having $T_M$ - $T_S$ at least 15 (etc) centigrade degrees. The disclosure of that specification is incorporated herein by reference.

Figure 1 shows an article comprising a dimensionally recoverable, preferably heat-shrinkable, sleeve 1 having an annular void resulting from the sleeve's non-uniform cross-sectional size. This annular void is closed by a net 2 and contains the sealing material 3 in particulate form.

Formation of a cable block is shown in figure 2, where the upper half of the figure shows the sleeve in position around a bared part 4 of a cable 5, and the lower half shows the installed product after shrinkage of the sleeve 1. The sealing material 3 can be seen to have permeated the core of the cable at 6.

Dimensional-recoverability of the sleeve will in general displace the sealing material from a position around the cable into the core of the cable, and a satisfactory cable block may result from recovery. In the case of recoverable sleeves formed from a crystalline or semi-crystalline material (such as one comprising polyethylene) a shrinkage of generally much greater force may arise a cooling after dimensional heat-recovery. This occurs as the material recrystallizes. In the case of prior art materials, recrystallization of the sleeve would occur some time after the sealing material had recrystallized and therefore the forces resulting from recrystallization would not contribute to useful displacement of the sealing material. In the present invention however solidification may be delayed considerably and the sealing material may have a sufficiently low viscosity that recrystallization forces of the sleeve can displace it further as desired.

The sleeve preferably comprises an article or material as disclosed in EP 0116393 (Raychem), the disclosure of which is incorporated herein by reference. That specification discloses recoverable sleeves which can have high shrinkage forces and /or ratios and can be heated to high temperatures. A surprising benefit can be obtained by using such sleeves in conjunction with the materials disclosed herein, particularly for driving the materials into cables to make cable blocks.

Preferred articles for use in the present invention therefore comprise a composite structure of a heat-recoverable fabric and a polymer matrix material, characterized in that:

(a) the heat recoverable fabric comprises heat-recoverable fibres formed preferably from a cross-linked polymeric material such as high density polyethylene and that will recover when heated, the fibres having a recovery stress (Y) of at least $5 \times 10^{-2}$, preferably $5 \times 10^{-1}$, more preferably 1, MPa at a temperature above their recovery temperature (preferably above their crystalline melting transition temperature); and

(b) the polymer matrix material has an elongation/temperature profile such that there exists a temperature (t) which is at or above the recovery temperature (preferably crystalline melting transition temperature) of the fibres, at which temperature the polymer matrix material has an elongation to break of greater than 20% and a 20% secant modulus (X) of at least $10^{-2}$ MPa (measured at a strain rate of 300% per minute), and at which temperature the following inequality is satisfied

$$\frac{X}{Y}\,\frac{(1 - R)}{R}$$

is less than 1, preferably less than 0.5, especially less than 0.05, where R is the mean effective volume fraction of heat-recoverable fibres in the composite structure along a given direction based on the total volume of the composite structure, or relevant portion thereof.

Figure 3 shows encapsulation of a branched power cable, referred to herein as a high voltage cable to distinguish it from communications cables. Two cables 7 are joined to a branch cable 8, by connecting their conductors 9 together in a metal block 10. The conductive materials at the connection have to be protected from the environment in a void-free manner, and also any moisture that may travel along cables 7 and 8 has to be prevented from entering the splice region. A first sealing material 11 may be provided around the ends of the jackets of the cables 7 and 8, and a second sealing material 12 may be provided around the central region of the splice and may (but need not) overlap the first material 11. A housing such as a heat-shrinkable sleeve 13 (which may be internally-coated with a third sealing material) may be provided around the first and second materials to provide further protection and/or to displace the first and second materials into close contact with the components to be protected. The sleeve 13 is shown prior to shrinkage.

Although the sealing materials may be positioned approximately in the correct locations some flow or other deformation will generally be desirable to ensure absence of voids in the finished splice. This deformation may be difficult to achieve with many sealing materials due to the awkward sizes and shapes of the interstices of the splice to be sealed, and because of the size of the heatsink hot-flow may be difficult to achieve. We have found that the materials disclosed herein are useful as one or more of the first, second and third materials and that other aspects of the present invention are useful for sealing of such power cables and splices.

Figure 4 shows an in-line splice between power cables. Here each conductor 9 is connected using a separate connector 14, and an insulating cross-piece, or other filler-piece, 15 is placed between the conductor to keep them apart. Generally it is preferred that such piece 15 does not melt, and the invention may be used to provide a seal around the conductors 9 in each recess of the piece 15. In some circumstances a material disclosed herein may be used as at least part of the piece 15.

The central part of a sealed splice of the type shown in figure 4 is illustrated in figure 5. Conductors 9 are separated by a cross-piece 15 and sealed in a sealing material 16 which may be provided by means of the present invention. A cover, such as a heat-shrinkable sleeve, 17 may be provided around the material 16. The arrangement of Figure 5 may be used to seal or protect things other than electrical conductors, for example pipes, and may therefore comprise a device for holding pipes together or a grommet or other device for protecting pipes, wires or cables etc as they pass through a bulkhead. In a further variation the arrangement of figures 5 may comprise a duct seal, the material 16 sealing one or more conduits within a duct 17.

Figure 6 shows a way of sealing wires or other elongate substrates 18. A profile 19 is moulded or otherwise formed having recesses 20 into which the substrates may be snapped or otherwise fitted. The profile may then be folded or coiled up and if desired some cover such as a heat-shrinkable sleeve installed around it. The profile may be heated to cause it to become flowable or otherwise deformable to make a close seal to the substrates. Shrinkage of an overlying shrinkable sleeve may bring about such deformation. The profile 19 may comprise a material disclosed herein, or other aspects of the invention may be used to install such a profile.

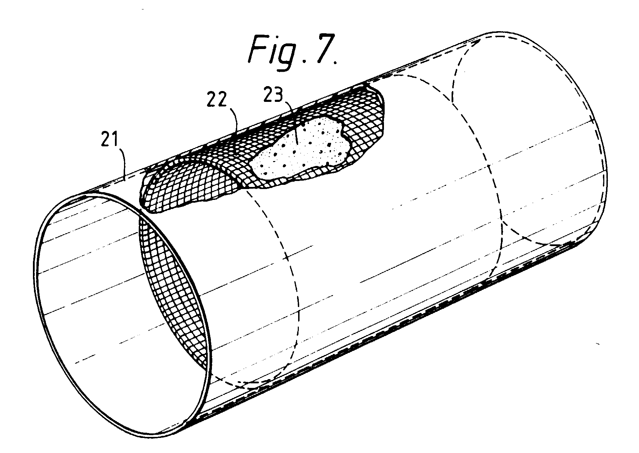

Figure 7 illustrates a heat-shrinkable or other sleeve 21 and a flexible bag 22 containing a sealing material 23, preferably in particulate form. The bag may be provided attached to an inner surface of the sleeve, or it may be supplied separately. The bag may be generally flat, for example comprising two layers of mesh (or one layer of mesh and one imporforate layer) attached together around their edges. The bag may comprise a series of compartments, either to separate different components of the sealing material and/or to improve flexibility of the filled bag, making it easier to wrap around a cable etc. heat-shrinkable wraparound or tubular sleeve may then be installed over the wrapped bag.

The invention is further illustrated by the following examples.

<u>Example 1</u>

A cable block was made in a telephone cable having 600 pairs of conductors as follows, at 20°C.

A portion of cable jacket of 100 mm length was removed at an appropriate position along the cable, and internal cable wraps and tapes were untied and removed to allow the conductor to be spread apart slightly. A protective mesh tube was then placed around the exposed conductors, and if desired, channeling pins were placed through the bundle of conductors to increase the size of interstices where sealing material is desired to flow.

A compartmented mesh bag containing sealing material (similar to that shown in figure 7) was then installed around the exposed conductors, and taped in its wrapped configuration. Cable jacket adjacent each end of the exposed conductors was then cleaned and abraded and flame brushed if desired. A heat-shrinkable sleeve having a shrinkage temperature 115°C was then positioned around the bag of sealing material, and overlapping the abraded lengths of cable jacket. The sleeve was then heat-shrunk into sealing engagement with the cable at each abraded region, at first leaving a central region over the bag substantially unshrunk. The sleeve may have been coated with a hot-melt or other adhesive, such as a polyamide (preferably having a small $T_M$-$T_S$, especially less than 15 centigrade degrees because a bond to the cable is desirably made quickly). The central region of the sleeve is now heated to cause the temperature of the sealing material to rise above $T_M$ allowing it to be deformed by the now shrinking sleeve into interstices between the conductors of the cable to form a cable block. After the sleeve has been shrunk as desired, a second sleeve may be installed over it if desired. The material of the bag could be beamed or otherwise cross-linked and it too could shrink. Its contraction on recrystallization could (like that of the sleeve) add to the force driving the sealing material into the cable.

In example 1 the sealing material was a blend of an acrylated thermoplastic polyurethane together with lower molecular weight species, available from Baxenden Chemicals Ltd. under the Trade Mark "Xenacryl 273". The material has a value of $T_M$ of 60.5°C, of $T_M$ less than 30°C, and therefore $T_M$-$T_S$ greater than 30.5°C.

The resulting cable block was then subjected to a flash pressure test.

A satisfactory block was obtained.

A similar block was formed using a curing version of this material, and the block passed pressure/temperature

cycling tests.

Examples 2 - 11

The materials set out below were used as sealing materials for various uses including cable blocks, and satisfactory results were obtained.

| Material | | | | | |
|---|---|---|---|---|---|
| Example | Trade mark | Chemical Name | $T_M$°C | $T_S$°C | ($T_M$-$T_S$) |
| 2 | CAPA 240 (from Interox) | Polycaprolactone Mol. weight 4000 | 66 | 30-40 | 36-26 |
| 3 | CAPA 231 (from Interox) | Polycaprolactone Mol.wt. 3000 | 66.5 | < 30 | > 36.5 |
| 4 | CAPA 630 (from Interox) | Polycaprolactone Mol. wt. 30,000 | 67 | < 40 | > 27 |
| 5 | | Polyvinylstearate | 54.5 | < 30 | > 24.5 |
| 6. | PA 1140 (UCEFIX from UCB) | Polyurethane | 61 | < 30 | > 31 |
| 7. | PA 2250/I (from UCB) | Polyurethane | 107 | < 30 | > 77 |
| 8. | PA 2240/I (from UCB) | Polyurethane | 81.5 | < 30 | > 51.5 |
| 9. | DB 8910 (from Shell) | Polyalphaolefin | 99 | 50-60 | 39-49 |

Comparative Examples 10 - 12

The materials below were used as sealing materials for various uses including cable blocks, where sealing was found to be unsatisfactory and in particular large cables could not be blocked.

| Example | Trade mark | Chemical Name | $T_M$°C | $T_S$°C | ($T_M$-$T_S$) |
|---|---|---|---|---|---|
| 10 | | Compounded polyamide adhesive. | 82 | 70-80 | 2-12 |
| 11 | | Paraffin wax | 64 | 50-70 | < 14 |
| 12 | Macromelt 6071 | Polyamide Adhesive (Henkel) | 85 | 70-80 | 5-12 |

Other compositions that we have found to be successful in blocking cables having 200 or more pairs of conductors are as follows. Each composition comprised a mixture of 9 parts by weight of Part A and l part by weight of Part B except in example 22 where the ratio was 60% and 40%, and in examples 24 and 25 where part B was absent. Trade names are given.

| Example | Part A | Part B |
|---|---|---|
| 13 | Xenacryl EP9A/273 | Xenacryl 273 |
| 14 | Xenacryl 273 | PA 1140 |
| 15 | UCB IRR 156 | Evatane 28800 |
| 16 | Xenacryl 273 | Evatane 28800 |
| 17 | UCB IRR 156 | AC143 |
| 18 | UCB IRR 156 | HC 8571 |
| 19 | UCB IRR 156 | AY6070 |
| 20 | UCB IRR 156 | Opponal B10 |
| 21 | UCB IRR 156 | Piccopole 100 |
| 22 | Evatane 28800 | AC143 |
| 23 | UCB IRR 156 | PA 1140 |
| 24 | Harcros RCP 28800 | |
| 25 | Evatane 28800 | |
| 26 | Xenacryl 273 | Capa 240 |
| 27 | Xenacryl 273 | Capa 630 |
| 28 | UCB IRR156 | |

Each of the compositions cured on heating except those of examples 22, 24, 25 and 28.

PA 1140 is a polyester urethane, UCB IRR156 is a urethane acrylate, evatane 28800 is an ethylene vinylacetate, AC143 is an ethylene acrylic copolymer, HC 8571 is an ethylene-acrylic ester-maleic anhydride copolymer, AY6070 is an ethylene-acrylc ester copolymer, Opponal B10 is a polybutene, Piccopole is a tackifying resin, Harcros RCP 2880 is a urethane acrylate, and Capa 240 and Capa 630 are polycaprolactones.

To conclude, it is noted that the invention provides methods, materials and articles for sealing, including blocking, bonding and/or isolating substrates for example cables using a sealing material that can be displaced into interstices in a heat sink. Any one or more of the materials (defined by polymeric type, chemical functionality and/or physical functionality), end uses, sleeves or other articles may be selected alone or in combination. In some instances a sealing material may be employed having $T_M$ - $T_S$ less than 15 centigrade degrees, and inventive formulations and uses, particularly involving curing, are disclosed herein.

## Claims

**1.** A method of sealing a substrate having an interstice therein, which comprises:

(1) providing a sealing material having $T_M$ - $T_S$ at least 15 centigrade degrees, and a dimensionally-recoverable article, the sealing material being provided as part of, or in conjunction with, the dimensionally-recoverable article;
(2) heating the material to a temperature of at least $T_M$;
(3) causing the material to flow into the interstice; and
(4) solidifying the material to achieve the desired seal.

**2.** A method according to claim 1, in which the solid material at a temperature below $T_M$ is located adjacent the substrate and is then heated to a temperature above $T_M$.

**3.** A method according to claim 1 or claim 2, in which the dimensionally-recoverable article comprises a hollow article that is positioned around at least part of the substrate.

**4.** A method according to any preceding claim, in which the sealing material is in particulate form.

**5.** A method according to any preceding claim, in which the dimensionally-recoverable article comprises a heat-shrinkable article, and the sealing material is caused to flow into the interstice by shrinkage of the heat-shrinkable article.

**6.** A method according to any preceding claim, in which the substrate comprises a cable, the method comprising a method of forming a cable block.

**7.** A method according to claim 6, in which the dimensionally-recoverable article comprises a heat-shrinkable sleeve, and the cable block is formed by:

(1) removing a portion of cable jacket at an end or intermediate the ends of the cable;
(2) providing the sealing material at an inner surface of a heat-shrinkable sleeve;
(3) positioning the sleeve around the cable where the portion of jacket was removed;
(4) heating the sleeve to a temperature such that it shrinks and the material reaches at least $T_M$, shrinkage causing the material to flow between conductors of the cable; and
(5) solidifying the material to form the cable block.

**8.** A method according to any preceding claim, in which the sealing material comprises a mixture of first and second particulate materials, $T_M$ being the melting temperature of the mixture, and $T_S$ being the solidifying temperature of the composition resulting from the heating of the mixture to at least $T_M$, whereby such heating causes the mixture to cure to form a cured composition which after solidifying has a softening temperature greater than $T_M$ of the mixture.

**9.** A method according to any preceding claim, in which the sealing material comprises a blend of polymers and/or a blend of a polymer and a non-polymeric diluent,
in which a first polymer and a second polymer and/or the diluent have substantially identical functionality.

**10.** A method according to claim 9, in which a polymer and/or the diluent have acrylate or other ethylenically unsaturated functionality.

**11.** A method according to any preceding claim, in which the sealing material comprises a crystalline or semi-crystalline polymer having interrupted crystallinity along the chain length.

**12.** A method according to any preceding claim in which the sealing material comprises a polymer containing polyurethane units.

**13.** A method according to claim 12, in which the polyurethane contains substantially no hard block.

**14.** A method according to claim 12 or 13, in which the polymer comprises a polyester - or polyether-based polyurethane.

**15.** A method according to claim 14, in which polyether units of the polyether-based polyurethane comprise polyethylene oxide, polypropylene oxide and/or polytetramethylene oxide.

**16.** A method according to claim 15, in which the polyester units comprise polycaprolactone, polytetramethylene adipate, and/or polyhexamethylene adipate units.

**17.** A method according to any of claims 12 to 16, in which the polyurethane units comprise methylene diphenylene, toluene diphenylene, isophorone diphenylene and/or 2,4,4 tri-methylhexane.

**18.** A method according to any preceding claim, in which the sealing material comprises a component having the formula (i)

$$E\ [\ (P(A))_X\ (Q(B)Y)R\ ]_n\ E \qquad (i)$$

wherein each of P,Q and B, which may be the same or different, comprises a diisocyanate; and A comprises an aliphatic chain, a polyester, a polyether, and/or a polyamide-
and B comprises a diol; and x and n are each an integer of one or more; and E where present is a group having terminal hydrogen, hydroxyl, amine, carboxylic acid or acrylate.

**19.** A method according to claim 18, in which the sealing material comprises:

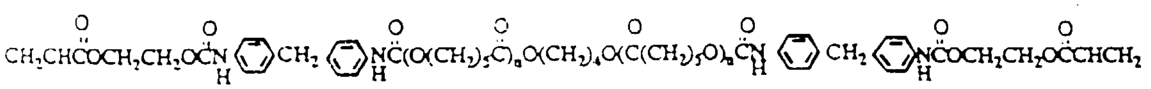

**20.** A method according to any preceding claim, in which the sealing material comprises a component having the formula (ii)

$$E\ [\ (A)_a\ (B)_b\ (D)_d\ ]_n\ E$$

wherein each of A, B and D, which may be the same or different comprises an aliphatic chain, a polyester, a polyether and/or a polyamide; and a, b and d are each zero or an integer of one or more with the proviso that at least one of a, b and d is at least one; and n is an integer of at least one; and E where present is a group having terminal hydrogen, hydroxyl, amine, carboxylic acid or acrylate.

**21.** A method according to any preceding claim, in which the sealing material comprises a homo-or co-polymer or a polyethylene copolymer.

**22.** A method according to any preceding claim, which additionally comprises curing a sealing material, the sealing material that is cured optionally comprising sealing material that has $T_M$ - $T_S$ of at least 15 centigrade degrees.

**23.** A method according to any preceding claim in which the sealing material comprises a mixture of

(1) in particulate form a blend of a curable polymer and a curing agent; and

(2) in particulate form a blend of a curable polymer and an initiator for the curing agent; or

a mixture of

(1) in particulate form a blend of (a) a polymer having $T_M$ - $T_S$ at least 15 centigrade degrees and (b) a first curable polymer; and

(2) in particulate form a blend of (a) a polymer having $T_M$ - $T_S$ at least 15 centigrade degrees and (b) a second curable polymer that reacts with the first curable polymer.

**24.** An article which comprises:

(1) a dimensionally-recoverable part; and

(2) a sealing material having $T_M$ - $T_S$ at least 15 centigrade degrees.

**25.** An article according to claim 24, in which the recoverable part is heat-recoverable and has a recovery temperature of $T_R$, wherein $T_R$ and $T_M$ differ by less than 30 centigrade degrees.

**26.** An article according to claim 24 or 25, in which the sealing material is located at a surface of the part by temporary restraining means until recovery of the part.

**27.** An article according to any of claims 24-26, in which the part comprises a heat-shrinkable sleeve, the sealing material being located at an internal surface of the sleeve.

**28.** An article according to claim 27, in which the sleeve has end regions of smaller cross-section and an intermediate region of larger cross-section, the sealing material being located at said intermediate region such that an internal passage through the sleeve is substantially cylindrical.

**29.** An article according to any of claims 24-28, in which the sealing material is as defined in any of claims 1-23.

**Patentansprüche**

**1.** Verfahren zum Abdichten eines Substrats, das einen Zwischenraum darin hat, wobei das Verfahren die folgenden Schritte aufweist:

(1) Bereitstellen eines Dichtungsmaterials, das einen Wert für $T_M$-$T_S$ von wenigstens 15 °C hat, und eines dimensionsmäßig rückstellbaren Gegenstands, wobei das Dichtungsmaterial als ein Teil von oder in Verbindung mit dem dimensionsmäßig rückstellbaren Gegenstand vorgesehen wird;
(2) Erwärmen des Materials auf eine Temperatur von wenigstens $T_M$;
(3) Bewirken, daß das Material in den Zwischenraum fließt; und
(4) Verfestigen des Materials, um die gewünschte Abdichtung zu erzielen.

**2.** Verfahren nach Anspruch 1,
wobei das feste Material bei einer Temperatur unter $T_M$ angrenzend an das Substrat angeordnet und dann auf eine Temperatur über $T_M$ erwärmt wird.

**3.** Verfahren nach Anspruch 1 oder Anspruch 2,
wobei der dimensionsmäßig rückstellbare Gegenstand einen hohlen Gegenstand aufweist, der um wenigstens einen Teil des Substrats herum positioniert ist.

**4.** Verfahren nach einem der vorhergehenden Ansprüche,
wobei das Dichtungsmaterial in Teilchenform ist.

5. Verfahren nach einem der vorhergehenden Ansprüche, wobei der dimensionsmäßig rückstellbare Gegenstand einen wärmeschrumpfbaren Gegenstand aufweist und das Dichtungsmaterial durch Schrumpfen des wärmeschrumpfbaren Gegenstands veranlaßt wird, in den Zwischenraum zu fließen.

6. Verfahren nach einem der vorhergehenden Ansprüche, wobei das Substrat ein Kabel aufweist, wobei das Verfahren ein Verfahren zum Bilden eines Kabelblocks aufweist.

7. Verfahren nach Anspruch 6, wobei der dimensionsmäßig rückstellbare Gegenstand eine wärmeschrumpfbare Hülse aufweist und der Kabelblock gebildet wird durch folgende Schritte:

(1) Entfernen eines Bereiches des Kabelmantels an einem Ende oder zwischen den Enden des Kabels;
(2) Vorsehen des Dichtungsmaterials an einer inneren Oberfläche einer wärmeschrumpfbaren Hülse;
(3) Positionieren der Hülse um das Kabel herum dort, wo der Bereich des Mantels entfernt worden ist;
(4) Erwärmen der Hülse auf eine solche Temperatur, daß sie schrumpft und das Material wenigstens die Temperatur $T_M$ erreicht, wobei das Schrumpfen das Material veranlaßt, zwischen Leiter des Kabels zu fließen; und
(5) Verfestigen das Materials, um den Kabelblock zu bilden.

8. Verfahren nach einem der vorhergehenden Ansprüche, wobei das Dichtungsmaterial ein Gemisch aus einem ersten und einem zweiten teilchenförmigen Material aufweist, wobei $T_M$ die Schmelztemperatur des Gemischs und $T_S$ die Erstarrungstemperatur der Zusammensetzung ist, die aus dem Erwärmen des Gemischs auf wenigstens $T_M$ resultiert, so daß ein solches Erwärmen das Gemisch veranlaßt, auszuhärten, um eine gehärtete Zusammensetzung zu bilden, die nach dem Verfestigen eine Erweichungstemperatur hat, die größer als $T_M$ des Gemisches ist.

9. Verfahren nach einem der vorhergehenden Ansprüche, wobei das Dichtungsmaterial eine Mischung aus Polymeren und/oder eine Mischung aus einem Polymer und einem nicht-polymeren Verdünnungsmittel aufweist,
wobei ein erstes Polymer und ein zweites Polymer und/oder das Verdünnungsmittel im wesentlichen identische Funktionalität haben.

10. Verfahren nach Anspruch 9, wobei ein Polymer und/oder das Verdünnungsmittel Acrylat- oder eine andere ethylenisch ungesättigte Funktionalität haben.

11. Verfahren nach einem der vorhergehenden Ansprüche, wobei das Dichtungsmaterial ein kristallines oder halbkristallines Polymer aufweist, das eine unterbrochene Kristallinität entlang der Kettenlänge hat.

12. Verfahren nach einem der vorhergehenden Ansprüche, wobei das Dichtungsmaterial ein Polymer aufweist, das Polyurethaneinheiten enthält.

13. Verfahren nach Anspruch 12, wobei das Polyurethan im wesentlichen keinen harten Block enthält.

14. Verfahren nach Anspruch 12 oder 13, wobei das Polymer ein Polyurethan auf Polyester- oder Polyetherbasis aufweist.

15. Verfahren nach Anspruch 14, wobei Polyethereinheiten des Polyurethans auf Polyetherbasis Polyethylenoxid, Polypropylenoxid und/oder Polytetramethylenoxid aufweisen.

16. Verfahren nach Anspruch 15, wobei die Polyestereinheiten Polycaprolacton-, Polytetramethylenadipat- und/oder Polyhexamethylenadipat-Einheiten aufweisen.

17. Verfahren nach einem der Ansprüche 12 bis 16,

wobei die Polyurethaneinheiten Methylendiphenylen, Toluoldiphenylen, Isophorondiphenylen und/oder 2,4,4-Trimethylhexan aufweisen.

**18.** Verfahren nach einem der vorhergehenden Ansprüche,
wobei das Dichtungsmaterial eine Komponente aufweist, die die folgende Formel hat:

$$E\,[\,(P(A))_x\,(Q(B))_y R]_n\,E \qquad \text{(i)},$$

wobei jedes von P, Q und B, die gleich oder verschieden sein können, ein Diisocyanat aufweist; und A eine aliphatische Kette, einen Polyester, einen Polyether und/oder ein Polyamid aufweist und B ein Diol aufweist; und <u>x</u> und <u>n</u> jeweils eine ganze Zahl von Eins oder mehr sind; und E, wenn vorhanden, eine Gruppe ist, die endständig Wasserstoff, Hydroxyl, Amin, Carbonsäure oder Acrylat hat.

**19.** Verfahren nach Anspruch 18,
wobei das Dichtungsmaterial folgendes aufweist:

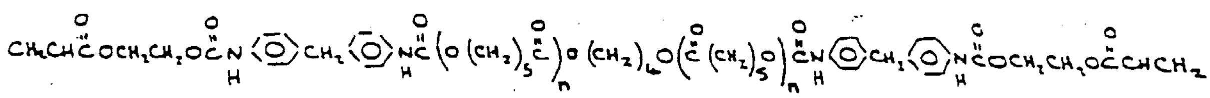

**20.** Verfahren nach einem der vorhergehenden Ansprüche, wobei das Dichtungsmaterial eine Komponente aufweist, die die Formel (ii) hat:

$$E\,[\,(A)_a\,(B)_b\,(D)_d\,]_n\,E \qquad \text{(ii)},$$

wobei jedes von A, B und D, die gleich oder verschieden sein können, eine aliphatische Kette, einen Polyester, einen Polyether und/oder ein Polyamid aufweist; und <u>a</u>, <u>b</u> und <u>d</u> jeweils Null oder eine ganze Zahl von Eins oder mehr sind, mit der Maßgabe, daß wenigstens eines von <u>a</u>, <u>b</u> und <u>d</u> wenigstens Eins ist; und <u>n</u> eine ganze Zahl von wenigstens Eins ist; und E, wenn vorhanden, eine Gruppe ist, die endständig Wasserstoff, Hydroxyl, Amin, Carbonsäure oder Acrylat hat.

**21.** Verfahren nach einem der vorhergehenden Ansprüche, wobei das Dichtungsmaterial ein Homo- oder Copolymer oder ein Polyethylencopolymer aufweist.

**22.** Verfahren nach einem der vorhergehenden Ansprüche, das zusätzlich das Aushärten eines Dichtungsmaterials aufweist, wobei das Dichtungsmaterial, das ausgehärtet wird, fakultativ Dichtungsmaterial aufweist, das einen Wert von $T_M$-$T_S$ von wenigstens 15 °C hat.

**23.** Verfahren nach einem der vorhergehenden Ansprüche, wobei das Dichtungsmaterial ein Gemisch aus folgenden Komponenten aufweist:

(1) einer Mischung in Teilchenform aus einem härtbaren Polymer und einem Härtungsmittel; und
(2) einer Mischung in Teilchenform aus einem härtbaren Polymer und einem Initiator für das Härtungsmittel;

oder ein Gemisch aus folgenden Komponenten aufweist:

(1) einer Mischung in Teilchenform aus

(a) einem Polymer, das einen Wert von $T_M$-$T_S$ von wenigstens 15 °C hat, und
(b) einem ersten härtbaren Polymer; und

(2) einer Mischung in Teilchenform aus

(a) einem Polymer, das einen Wert von $T_M$-$T_S$ von wenigstens 15 °C hat, und

(b) einem zweiten härtbaren Polymer, das mit dem ersten härtbaren Polymer reagiert.

**24.** Gegenstand, der folgendes aufweist:

(1) ein dimensionsmäßig rückstellbares Teil; und
(2) ein Dichtungsmaterial, das einen Wert von $T_M$-$T_S$ von wenigstens 15 °C hat.

**25.** Gegenstand nach Anspruch 24,
wobei das rückstellbare Teil wärmerückstellbar ist und eine Rückstelltemperatur von $T_R$ hat, wobei $T_R$ und $T_M$ um weniger als 30 °C differieren.

**26.** Gegenstand nach Anspruch 24 oder 25,
wobei das Dichtungsmaterial bis zur Rückstellung des Teils an einer Oberfläche des Teils durch temporär wirkende Rückhaltemittel angeordnet ist.

**27.** Gegenstand nach einem der Ansprüche 24 bis 26,
wobei das Teil eine wärmeschrumpfbare Hülse aufweist und wobei das Dichtungsmaterial an einer inneren Oberfläche der Hülse angeordnet ist.

**28.** Gegenstand nach Anspruch 27,
wobei die Hülse Endbereiche mit kleinerem Querschnitt und einen Zwischenbereich mit größerem Querschnitt hat, wobei das Dichtungsmaterial an dem Zwischenbereich angeordnet ist, so daß eine innere Passage durch die Hülse im wesentlichen zylindrisch ist.

**29.** Gegenstand nach einem der Ansprüche 24 bis 28,
wobei das Dichtungsmaterial so ausgebildet ist wie in einem der Ansprüche 1 bis 23 angegeben ist.

## Revendications

**1.** Procédé pour sceller de façon étanche un substrat représentant un interstice, qui comprend les étapes dans lesquelles :

(1) on fournit une matière de scellement étanche ayant une valeur $T_M$-$T_S$ d'au moins 15 degrés centigrades, et un article doué de reprise dimensionnelle, la matière de scellement étanche étant fournie en tant que partie de, ou conjointement avec, l'article doué de reprise dimensionnelle ;
(2) on chauffe la matière à une température d'au moins $T_M$ ;
(3) on amène la matière à pénétrer dans l'interstice en coulant ; et
(4) on solidifie la matière pour obtenir le scellement étanche souhaité.

**2.** Procédé selon la revendication 1, dans lequel la matière solide à une température inférieure à $T_M$ est placée de façon à être adjacente au substrat et est ensuite chauffée à une température supérieure à $T_M$.

**3.** Procédé selon la revendication 1 ou la revendication 2, dans lequel l'article doué de reprise dimensionnelle comprend un article creux qui est positionné autour d'au moins une partie du substrat.

**4.** Procédé selon l'une quelconque des revendications précédentes, dans lequel la matière de scellement étanche est sous forme de particules.

**5.** Procédé selon l'une quelconque des revendications précédentes, dans lequel l'article doué de reprise dimensionnelle comprend un article thermorétractable, et la matière de scellement étanche est amenée à pénétrer dans l'interstice en coulant sous l'effet du retrait de l'article thermorétractable.

**6.** Procédé selon l'une quelconque des revendications précédentes, dans lequel le substrat comprend un câble, le procédé comprenant un procédé de formation d'un blocage de câble.

**7.** Procédé selon la revendication 6, dans lequel l'article doué de reprise dimensionnelle comprend un manchon thermorétractable, et le blocage du câble est formé par :

(1) l'enlèvement d'une partie de la gaine du câble à une extrémité ou entre les extrémités du câble ;
(2) la présence de la matière de scellement étanche à une surface intérieure d'un manchon thermorétractable ;
(3) le positionnement du manchon autour du câble où la partie de la gaine a été enlevée ;
(4) le chauffage du manchon à une température telle qu'il se rétracte et que la matière atteint au moins la température $T_M$, le retrait amenant la matière à couler entre des conducteurs du câble ; et
(5) une solidification de la matière pour former le blocage du câble.

**8.** Procédé selon l'une quelconque des revendications précédentes, dans lequel la matière de scellement étanche comprend un mélange de première et seconde matières en particules, $T_M$ étant la température de fusion du mélange et $T_S$ étant la température de solidification de la composition résultant du chauffage du mélange à au moins $T_M$, grâce à quoi ce chauffage amène le mélange à durcir pour former une composition durcie qui, après solidification, possède une température de ramollissement supérieure à la température $T_M$ du mélange.

**9.** Procédé selon l'une quelconque des revendications précédentes, dans lequel la matière de scellement étanche comprend un mélange de polymères et/ou un mélange d'un polymère et d'un diluant non polymérique,
dans lequel un premier polymère et un second polymère et/ou le diluant ont sensiblement une fonctionnalité identique.

**10.** Procédé selon la revendication 9, dans lequel un polymère et/ou le diluant ont une fonctionnalité acrylate ou autre fonctionnalité d'insaturation éthylénique.

**11.** Procédé selon l'une quelconque des revendications précédentes, dans lequel la matière de scellement étanche comprend un polymère cristallin ou semicristallin ayant une cristallinité interrompue sur la longueur de la chaîne.

**12.** Procédé selon l'une quelconque des revendications précédentes, dans lequel la matière de scellement étanche comprend un polymère contenant des motifs polyuréthanne.

**13.** Procédé selon la revendication 12, dans lequel le polyuréthanne ne contient sensiblement pas de bloc dur.

**14.** Procédé selon la revendication 12 ou 13, dans lequel le polymère comprend un polyuréthanne à base de polyester ou de polyéther.

**15.** Procédé selon la revendication 14, dans lequel des motifs polyéther du polyuréthanne à base de polyéther comprennent de l'oxyde de polyéthylène, de l'oxyde de polypropylène et/ou de l'oxyde de polytétraméthylène.

**16.** Procédé selon la revendication 15, dans lequel les motifs polyester comprennent des motifs polycaprolactone, adipate de polytétraméthylène et/ou adipate de polyhexaméthylène.

**17.** Procédé selon l'une quelconque des revendications 12 à 16, dans lequel les motifs polyuréthanne comprennent du méthylène-diphénylène, du toluène-diphénylène, de l'isophorone-diphénylène et/ou du 2,4,4-triméthylhexane.

**18.** Procédé selon l'une quelconque des revendications précédentes, dans lequel la matière de scellement étanche comprend un constituant ayant la formule

$$E\ [\ (P(A))_X\ Q(B)_Y R\ ]_n\ E \qquad (i)$$

dans laquelle chacun de P, Q et B, qui peuvent être identiques ou différents, comprend un diisocyanate ; et A comprend une chaîne aliphatique, un polyester, un polyéther et/ou un polyamide, et B comprend un diol ; et <u>x</u> et <u>n</u> sont chacun un entier égal à un ou plus ; et E, lorsqu'il est présent, est un groupe à terminaison hydrogène, hydroxyle, amine, acide carboxylique ou acrylate.

**19.** Procédé selon la revendication 18, dans lequel la matière de scellement étanche comprend :

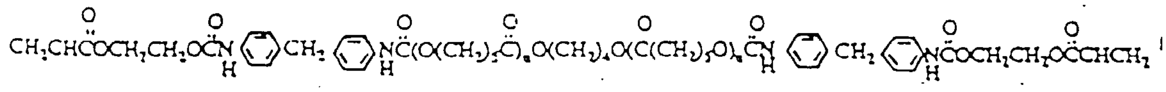

**20.** Procédé selon l'une quelconque des revendications précédentes, dans lequel la matière de scellement étanche comprend un constituant ayant la formule (ii)

$$E \, [ \, (A)_a \, (B)_b \, (D)_d \, ]_n \, E$$

dans laquelle chacun de A, B et D, qui peuvent être identiques ou différents, comprend une chaîne aliphatique, un polyester, un polyéther et/ou un polyamide ; et a, b et d sont égaux chacun à zéro ou à un entier égal à un ou plus pourvu qu'au moins l'un de a, b et d soit au moins égal à un ; et n est un entier au moins égal à un ; et E, lorsqu'il est présent, est un groupe ayant, en position terminale, de l'hydrogène, de l'hydroxyle, une amine, de l'acide carboxylique ou un acrylate.

**21.** Procédé selon l'une quelconque des revendications précédentes, dans lequel la matière de scellement étanche comprend un homopolymère ou un copolymère, ou un copolymère du type polyéthylène.

**22.** Procédé selon l'une quelconque des revendications précédentes, qui comprend en outre le durcissement d'une matière de scellement étanche, la matière de scellement étanche qui est durcie comprenant optionnellement une matière de scellement étanche qui possède une valeur $T_M$-$T_S$ d'au moins 15 degrés centigrades.

**23.** Procédé selon l'une quelconque des revendications précédentes, dans lequel la matière de scellement étanche comprend un mélange de

(1) sous forme de particules, un mélange d'un polymère durcissable et d'un agent de durcissement ; et
(2) sous forme de particules, un mélange d'un polymère durcissable et d'un initiateur pour l'agent de durcissement ; ou

un mélange de

(1) sous forme de particules, un mélange de (a) un polymère ayant une valeur $T_M$-$T_S$ d'au moins 15 degrés centigrades et (b) d'un premier polymère durcissable ; et
(2) sous forme de particules, un mélange de (a) un polymère ayant une valeur $T_M$-$T_S$ d'au moins 15 degrés centigrades et (b) d'un second polymère durcissable qui réagit avec le premier polymère durcissable.

**24.** Article qui comprend :

(1) une partie douée de reprise dimensionnelle ; et
(2) une matière de scellement étanche ayant une valeur $T_M$-$T_S$ d'au moins 15 degrés centigrades.

**25.** Article selon la revendication 24, dans lequel la partie douée de reprise de forme est douée de reprise de forme à chaud et possède une température $T_R$ de reprise de forme, $T_R$ et $T_M$ différant de moins de 30 degrés centigrades.

**26.** Article selon la revendication 24 ou 25, dans lequel la matière de scellement étanche est placée à une surface de la partie par un moyen de retenue temporaire jusqu'à une reprise de forme de la partie.

**27.** Article selon l'une quelconque des revendications 24-26, dans lequel la partie comprend un manchon thermorétractable, la matière de scellement étanche étant placée à une surface intérieure du manchon.

**28.** Article selon la revendication 27, dans lequel le manchon comporte des zones extrêmes d'une section transversale plus petite et une zone intermédiaire d'une section transversale plus grande, la matière de scellement étanche étant placée à ladite zone intermédiaire de façon qu'un passage s'étendant à l'intérieur du manchon soit sensiblement cylindrique.

**29.** Article selon l'une quelconque des revendications 24-28, dans lequel la matière de scellement étanche est définie dans l'une quelconque des revendications 1-23.

Fig.1.

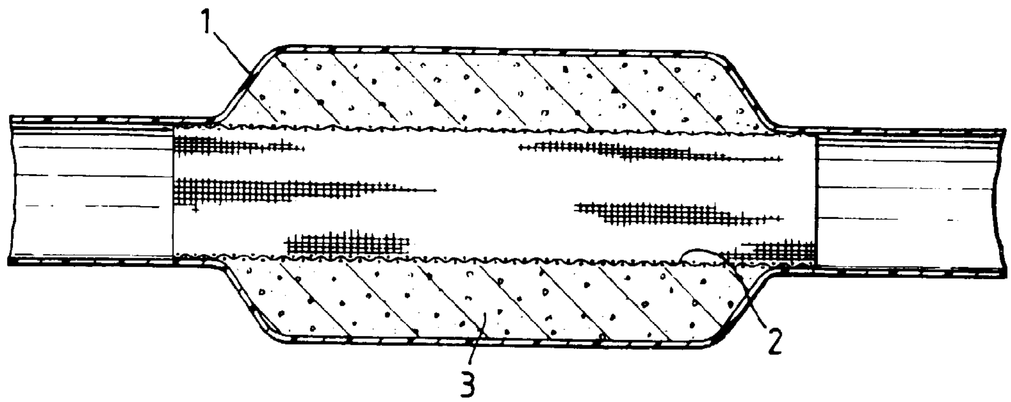


Fig.2.

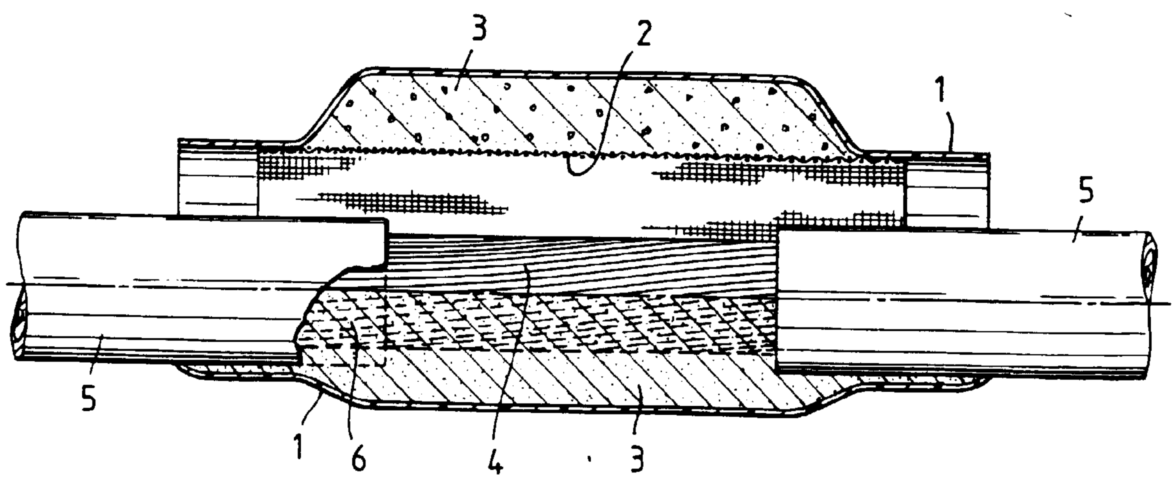

Fig. 3.

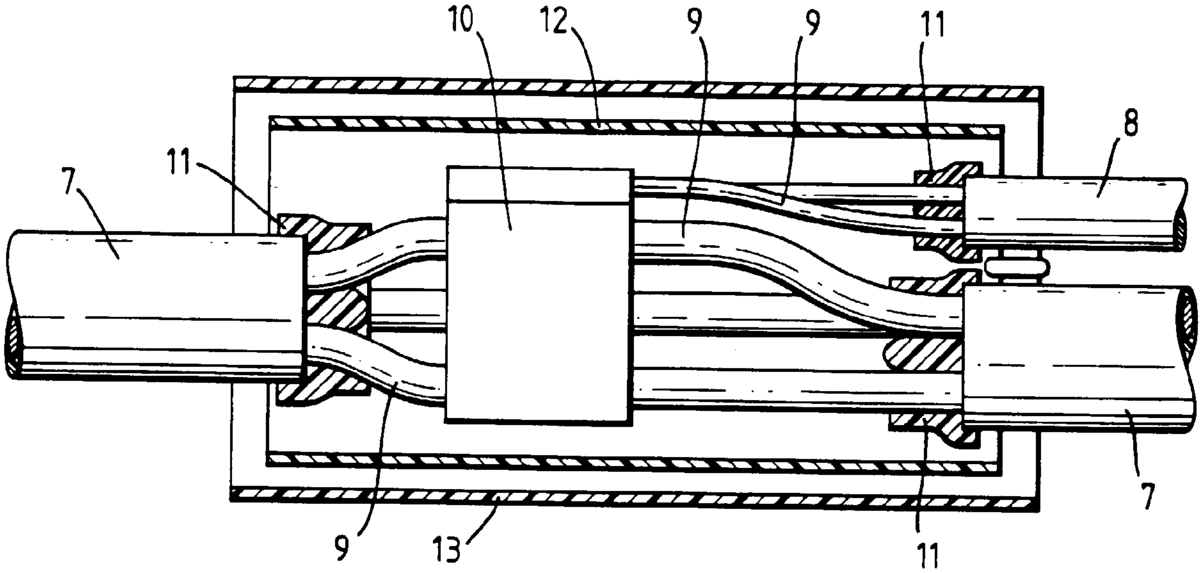


Fig. 4.

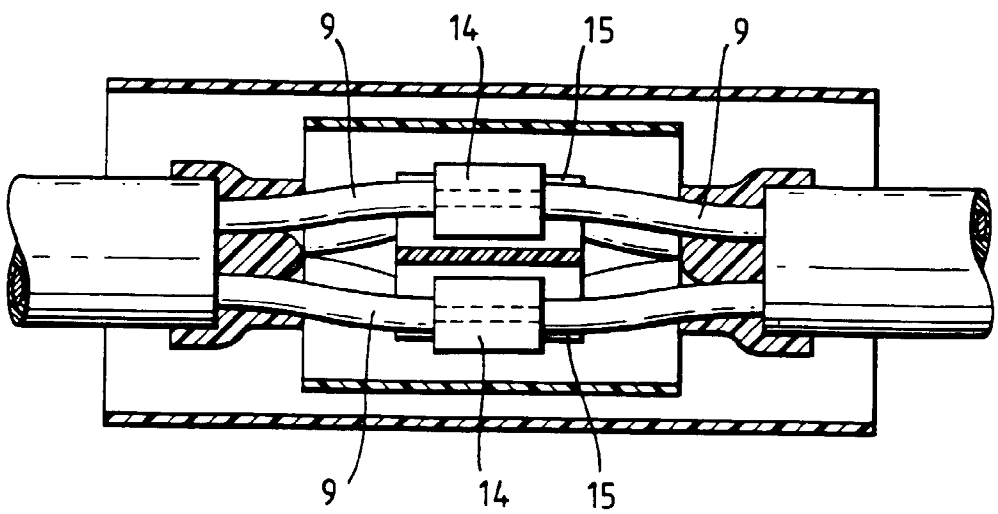

Fig. 5.

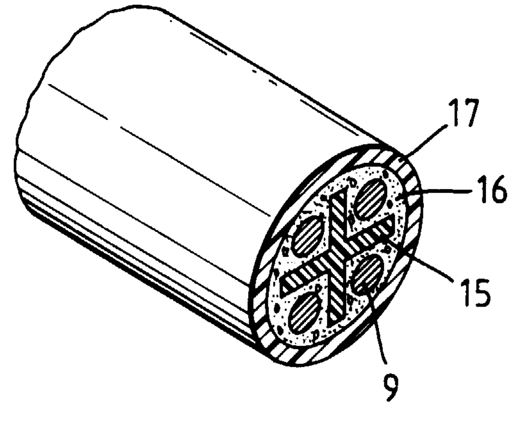


Fig. 6.

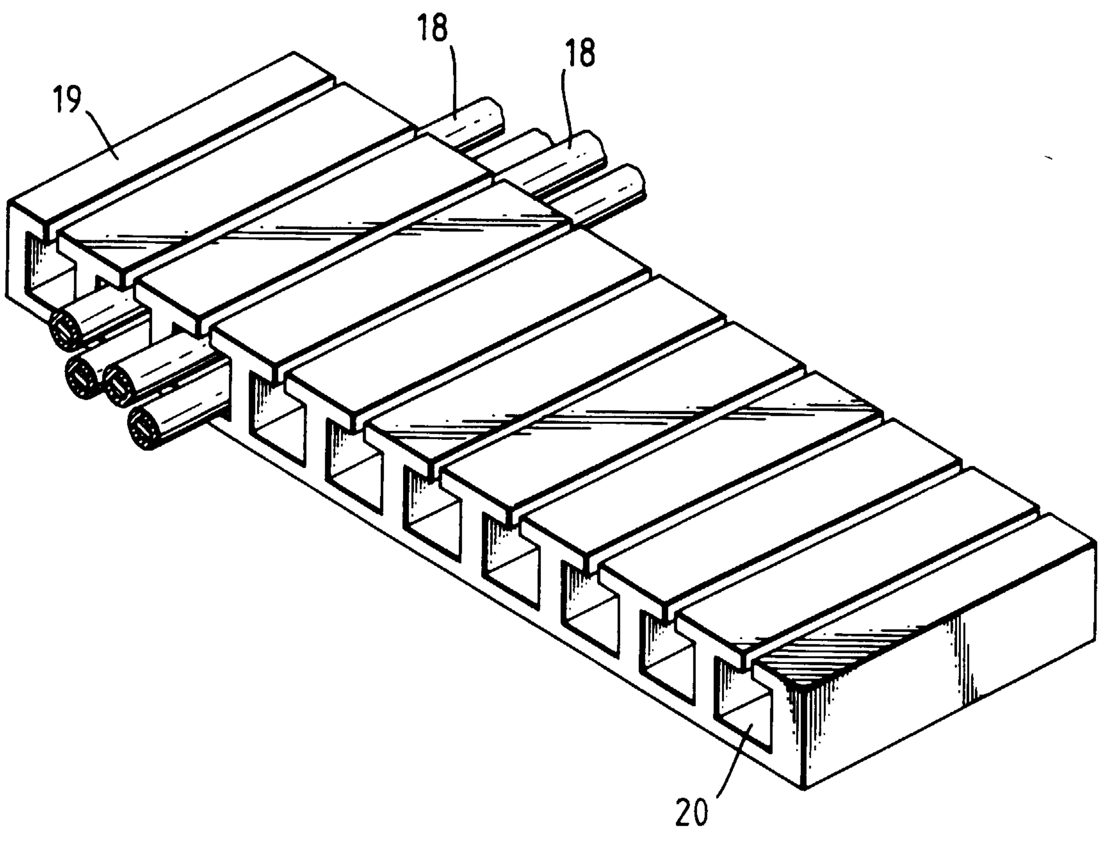

Fig. 7.